# EUROPEAN PATENT APPLICATION

(11) **EP 2 860 156 A1**
(43) Date of publication of application: **15.04.2015**
(21) Application number: 13800533.5
(22) Date of filing: 31.05.2013
(51) Int. Cl.: C01B 33/26, B01J 20/16, B01J 20/30, G21F 9/12

(54) **ALUMINUM SILICATE AND METHOD FOR PRODUCING SAME**

(30) Priority: 08.06.2012 JP 2012130492
(71) Applicant: Kyowa Chemical Industry Co., Ltd, Takamatsu-shi, Kagawa 761-0113 (JP)
(72) Inventor: SUZUKI, Takafumi, Takamatsu-shi Kagawa 761-0113 (JP)
(74) Representative: Raynor, Stuart Andrew
(86) International application number: PCT/JP2013/065768
(87) International publication number: WO 2013/183742

(57) **Abstract**

Aluminum silicate having a large cesium ion adsorption capacity and a production process therefor.
(1) The aluminum silicate is represented by the following formula (I):

xNa₂O·Al₂O₃·mSiO₂·nH₂O (I)

(wherein 0.12 ≦ x ≦ 1.3, 5.0 ≦ m ≦ 15.0, and 5 ≦ n ≦ 15),
(2) the Na₂O content of the aluminum silicate is 1.5 to 11.0 wt%, and
(3) at least 50 % of aluminum atoms are tetra-coordination aluminum atoms.

## Description

### TECHNICAL FIELD

The present invention relates to aluminum silicate having a large cesium ion adsorption capacity and a production process therefor.

### BACKGROUND ART

Radioactive cesium which was released to the outside by the accident at the Fukushima No. 1 nuclear power plant caused by the Great East Japan Earthquake has become a big problem. Adsorption/immobilization using an adsorbent is expected as a method of removing radioactive cesium. As a method of adsorbing and removing a cesium ion, there is proposed a method making use of amorphous aluminum silicate (Non-Patent Document 1). Further, as a method of adsorbing and removing a cesium ion, there is proposed a method making use of zeolite or a lamellar silicate (Non-Patent Document 2). Patent Document 1 proposes mesoporous silica alumina gel.

However, there is room for the improvement of the cesium ion adsorption capacities of the aluminum silicates disclosed by these documents.
(Patent Document 1) JP-A 2002-284520
(Non-Patent Document 1) Summaries A25 of Lectures at the 55-th Annual Symposium of Viscosity Chemistry
(Non-Patent Document 2) Database for the removal and recovery technologies of radioactive substances

### DISCLOSURE OF THE INVENTION

It is an object of the present invention to provide aluminum silicate having a large cesium ion adsorption capacity and a production process therefor. It is another object of the present invention to provide a method of adsorbing and removing a cesium ion.

The inventors of the present invention conducted intensive studies to provide aluminum silicate having excellent cesium ion adsorptivity and the excellent effect of adsorbing and immobilizing a cesium ion. As a result, they found that aluminum silicate having excellent cesium ion adsorptivity is obtained by reacting a water-soluble silicate with a water-soluble aluminum salt in a specific ratio under specific conditions. The present invention was accomplished based on this finding.

That is, the present invention is aluminum silicate which is (1) represented by the following formula (I):

xNa₂O·Al₂O₃·mSiO₂·nH₂O (I)

(wherein 0.12 ≦ x ≦ 1.3, 5.0 ≦ m ≦ 15.0, and 5 ≦ n ≦ 15), wherein (2) the Na₂O content is 1.5 to 11.0 wt%, and (3) at least 50 % of aluminum atoms are tetra-coordination aluminum atoms.

Further, the present invention is a process for producing aluminum silicate, comprising the steps of:
(1) reacting a water-soluble silicate with a water-soluble aluminum salt to ensure that the ratio (Si/Al) of silicon atoms contained in the water-soluble silicate to aluminum atoms contained in the water-soluble aluminum salt becomes 2.5 to 7.5 to obtain a reaction solution having a pH of 3.5 to 10.5;
(2) aging the reaction solution at 60 to 120°C for 0.5 to 3 hours;
(3) carrying out the solid-liquid separation of the reaction solution to obtain cake; and
(4) washing and drying the cake.

Also, the present invention is a method of reducing the content of a cesium ion in an aqueous solution containing the cesium ion by bringing the aqueous solution into contact with aluminum silicate, wherein
(1) the aluminum silicate is represented by the following formula (I):

   xNa₂O·Al₂O₃·mSiO₂·nH₂O (I)
(wherein 0.12 ≦ x ≦ 1.3, 5.0 ≦ m ≦ 15.0, and 5 ≦ n ≦ 15), (2) the Na₂O content of the aluminum silicate is 1.5 to 11.0 wt%, and (3) at least 50 % of aluminum atoms are tetra-coordination aluminum atoms.

### BEST MODE FOR CARRYING OUT THE INVENTION

The present invention will be described in detail hereinunder.

### (aluminum silicate)

The aluminum silicate of the present invention is represented by the following formula (I) as described above.

xNa₂O·Al₂O₃·mSiO₂·nH₂O (I)

In the formula (I), x, m and n satisfy the following ranges. 0.12 ≦ x ≦ 1.3, 5.0 ≦ m ≦ 15.0, and 5 ≦ n ≦ 15. Further, x, m and n preferably satisfy 0.25 ≦ x ≦ 1.0, 7.0 ≦ m ≦ 12.0, and 6.0 ≦ n ≦ 12, respectively.

When x in the formula (I) is smaller than 0.12, the number of aluminum ions escaping into a reaction mother liquid becomes large, thereby reducing the yield disadvantageously. When x is larger than 1.3, the Na₂O content becomes higher than that of the cation adsorption sites of the aluminum silicate. Therefore, free Na is contained in the aluminum silicate and removed by washing. When 0.12 ≦ x ≦ 1.3, this corresponds to an Na₂O content of 1.5 to 11.0 wt%.

Aluminum silicate in which m is outside the above range has a small cesium ion adsorption capacity disadvantageously.

To make n smaller than 5, a large amount of heat energy is required in the drying step, which is uneconomical. When n is larger than 15, the aluminum silicate content of the dried product becomes low with the result of a small cesium ion adsorption capacity.

The Na₂O content is 1.5 to 11.0 wt%, preferably 1. 6 to 8.0 wt%.

### (coordination number)

In general, aluminum atoms contained in the aluminum silicate can have coordination numbers of 4 and 6. However, to adsorb cations, they must have a coordination number of 4. That is, in order for the aluminum atoms to have a coordination number of 4, the isomorphous substitution of the aluminum atoms contained in the aluminum silicate by silica atoms must be carried out. When the aluminum atoms are substituted by silica atoms, monovalent negative charge is produced. This negative charge becomes a cation adsorption site . When the aluminum atoms have a coordination number of 6, they are electrically neutral and thereby there is no alkali adsorption site like above. At least 50 %, preferably 60 to 70 %, more preferably at least 80 % of the aluminum atoms contained in the aluminum silicate of the present invention have a coordination number of 4.

The measurement of the coordination number of an aluminum atom may be carried out by NMR. For example, when ²⁷Al-NMR is measured by using AlCl₃·6H₂O as a reference substance, the peak of a chemical shift of hexa-coordination aluminum appears at around 0 ppm and the peak of a chemical shift of a tetra-coordination aluminum atom appears at around 55 ppm. It is possible to know the ratio of tetra-coordination and hexa-coordination aluminum atoms existent in the aluminum silicate from the ratio of the peak areas which appear at these positions.

### (crystal structure)

The aluminum silicate of the present invention has an amorphous structure according to a powder X-ray diffraction method. That is, there are no peaks which show specific plane indices in the X-ray diffraction diagram.

### (production process)

The aluminum silicate of the present invention can be produced by the following steps (1) to (4).

### (step (1))

The step (1) is to react a water-soluble silicate with a water-soluble aluminum salt to ensure that the ratio (Si/Al) of silicon atoms contained in the water-soluble silicate to aluminum atoms contained in the water-soluble aluminum salt becomes 2.5 to 7.5 so as to obtain a reaction solution having a pH of 3.5 to 10.5.

Examples of the water-soluble silicate include alkali metal silicates such as sodium silicate and potassium silicate. Examples of the sodium silicate include sodium silicate Nos. 1, 2, 3 and 4 and sodium metasilicate.

Examples of the water-soluble aluminum salt include aluminum chloride, aluminum nitrate and aluminum sulfate.

As for the ratio of the water-soluble silicate to the water-soluble aluminum salt, the ratio (Si/Al) of silicon atoms contained in the water-soluble silicate to aluminum atoms contained in the water-soluble aluminum salt should be 2.5 to 7.5, preferably 3.5 to 6.

The reaction may be a batch reaction which is carried out by injecting a predetermined amount of a water-soluble silicate aqueous solution and a predetermined amount of a sodium hydroxide aqueous solution into a reactor and then adding a predetermined amount of a water-soluble aluminum salt aqueous solution at a fixed rate. Or, the water-soluble silicate and the sodium hydroxide aqueous solution may be injected into the water-soluble aluminum salt aqueous solution. Further, Na₂O contained in the water-soluble silicate (water glass) may be mixed (reacted) with Al₂O₃ contained in the water-soluble aluminum salt in equal amounts.

Further, the reaction may be a continuous reaction which is carried out by injecting the water-soluble silicate aqueous solution, the sodium hydroxide aqueous solution and the water-soluble aluminum salt aqueous solution into a reactor filled with a predetermined amount of water in a predetermined ratio. The Si concentration of the water-soluble silicate is preferably 1. 5 to 2.0 moles/L. The Al concentration of the water-soluble aluminum salt is preferably 0.25 to 0.4 mole/L.

The aluminum silicate of interest may also be obtained by carrying out the above batch reaction or the above continuous reaction to ensure that the target molar ratio of the water-soluble silicate aqueous solution and the water-soluble aluminum salt is obtained and letting a set Na₂O content pass at the time of washing instead that a sodium hydroxide aqueous solution is used at the time of the reaction to control the change of the Na₂O content in the aluminum silicate.

Although the reaction temperature is not particularly limited, it may be 20 to 70 °C. The pH of the reaction solution is 3.5 to 10.5, preferably 3.8 to 9.5. When the pH of the reaction solution is less than 3.5, the number of aluminium ions escaping into the reaction mother liquid becomes large, thereby reducing the yield. When the pH of the reaction solution is 10.5 or more, the Na₂O content becomes higher than that of the cation adsorption sites of the obtained aluminum silicate disadvantageously. Therefore, the pH of the reaction solution must fall within the above range.

### (step (2))

The step (2) is to age the reaction solution at 60 to 120°C for 0.5 to 3 hours. The aging temperature is preferably 60 to 95°C. The aging time is preferably 1.0 to 2.0 hours. Aging can be carried out in a reaction oven.

### (step (3))

The step (3) is to carry out the solid-liquid separation of the reaction solution so as to obtain cake. Solid-liquid separation may be carried out by using a drum filter or a filter press. The solid-liquid separation temperature is preferably normal temperature to 50°C, more preferably 25 to 35°C.

### (step (4))

The step (4) is to wash and then dry the cake.

Washing may be carried out by using a drum filter or a filter press as it is interlocked with solid-liquid separation. The temperature of washing water is normal temperature to 50°C, preferably 25 to 35°C. The amount of the washing water is 10 times larger than that of the aluminum silicate particle contained in the aged suspension.

Drying may be carried out by using a band dryer after the washed cake is dehydrated or by re-emulsifying the washed and dehydrated cake to spray dry it.

Drying by means of the band dryer is carried out at an inlet temperature of 50 to 200°C and an outlet temperature of 120 to 170°C, preferably at an inlet temperature of 160 to 180°C and an outlet temperature of 130 to 150°C. Drying by means of the spray dryer is carried out at an inlet temperature of 350 to 500°C and an outlet temperature of 160 to 200°C, preferably at an inlet temperature of 400 to 450°C and an outlet temperature of 170 to 190°C.

### EXAMPLES

The following examples are provided for the purpose of further illustrating the present invention but are in no way to be taken as limiting.

The characteristic properties of the aluminum silicate were measured by the following methods.
(1) Na₂O content: The Na content was obtained by using the ANA-135 flame photometer of Tokyo Hikari Denki Co. , Ltd. to calculate the Na₂O content (wt%).
(2) Al₂O₃ content: After the sample was dissolved in hydrochloric acid and filtered, the filtrate was measured in accordance with the dry aluminum hydroxide gel determination method of Japanese Pharmacopoeia.
(3) SiO₂ content: This was measured in accordance with the anhydrous silicic acid determination method of Japanese Pharmacopoeia.
(4) H₂O content: This was obtained from an ignition loss obtained by baking the sample at 900°C for 3 hours.
(5) Tetra-coordination Al atom (%): This was calculated from the peak area of a chemical shift of a hexa-coordination aluminum atom and the peak area of a chemical shift of a tetra-coordination aluminum atom by carrying out NMR²⁷ Al-NMR measurement using AlCl₃· 6H₂O as a reference substance.
(6) Powder X-ray diffraction: This was measured with Cu-Kα by using the RINT2200V of Rigaku Corporation.
(7) Measurement of cesium ion concentration: This was measured by using the P-5000 inductively-coupled plasma source mass spectrometer (ICP-MS) of Hitachi, Ltd.

### Example 1 (production of aluminum silicate 1)

### [step (1)]

800 mL of water was injected into a stainless-steel reactor equipped with an overflow system and having a capacity of 2 L in advance, and a No. 3 water glass aqueous solution having an Si concentration of 1.67 mol/L was supplied at a flow rate of 33.4 ml/min and an aluminum sulfate aqueous solution having an Al concentration of 0.32 mol/L was supplied at a flow rate of 33.6 ml/min simultaneously by using a metering pump under agitation to carry out a continuous reaction at 30±1°C for 2 hours. The Si/Al ratio was 5.19. The obtained reaction suspension had a pH of 4.03.

### [step (2)]

The obtained reaction suspension was fed to a 10-L stainless-steel tank to be aged at 95°C for 2 hours.

### [step (3)]

The aged suspension was cooled to normal temperature and suction filtered by using a Nutsche filter to form cake.

### [step (4)]

Then, 7,000 mL of tap water was let pass through the cake to wash it. Subsequently, after dehydration, the cake was dried by using a laboratory scale hot air dryer and ground by means of a hammer mill to obtain aluminum silicate particles. The characteristic properties of the obtained aluminum silicate 1 are shown in Table 1.

### [cesium ion adsorption test 1]

100 mL of an aqueous solution having a Cs concentration of 1 mg/L and 1 g of the aluminum silicate obtained in Example 1 were fed to a 300-mL conical flask equipped with a stopper which was then set in a shaker set to 30°C to be shaken at an amplitude speed of 100 min⁻¹ for 1 hour and treated at 15,000 rpm for 15 minutes by using a centrifugal separator so as to measure the cesium ion concentration of the supernatant by means of an inductively-coupled plasma source mass spectrometer (ICP-MS). The result is shown in Table 2.

### [cesium ion adsorption test 2]

The same operation as in the cesium ion adsorption test 1 was carried out except that the amount of the aluminum silicate was changed to 0.5 g. The result is shown in Table 2.

### [cesium ion adsorption test 3]

The same operation as in the cesium ion adsorption test 1 was carried out except that the amount of the aluminum silicate was changed to 0.1 g. The result is shown in Table 2.

### Example 2 (production of aluminum silicate 2)

### [step (1)]

This step (1) was carried out under the same conditions as in Example 1. As a result, the obtained reaction solution had a pH of 4.01.

### [step (2)]

The aged suspension was cooled to normal temperature and suction filtered by using a nutsche filter to carry out solid-liquid separation so as to form cake.

### [step (3)]

Then, 3,000 mL of tap water was let pass through the cake. Subsequently, 3,000 mL of a sodium hydroxide aqueous solution having a concentration of 0.3 mol/L was let pass through the cake.

### [step (4)]

Then, after dehydration, the cake was dried by using a laboratory scale hot air dryer and ground by means of a hammer mill to obtain aluminum silicate particles. The characteristic properties of the obtained aluminum silicate 2 are shown in Table 1.

### [cesium ion adsorption test]

The same operation as in the cesium ion adsorption test 3 of Example 1 was carried out. The result is shown in Table 2.

### Example 3 (production of aluminum silicate 3)

The operation of Example 2 was repeated to obtain aluminum silicate particles except that 3,000 mL of a sodium hydroxide aqueous solution having a concentration of 0.1 mol/L was used as the sodium hydroxide aqueous solution in the step (3) of Example 2. The reaction temperature in the step (1) was 30±1°C, and the obtained reaction solution had a pH of 3.95. The characteristic properties of the obtained aluminum silicate 3 are shown in Table 1.

### [cesium ion adsorption test]

The same operation as in the cesium ion adsorption test 3 of Example 1 was carried out. The result is shown in Table 2.

### Example 4 (production of aluminum silicate 4)

### [step (1)]

800 mL of water was injected into a stainless-steel reactor equipped with an overflow system and having a capacity of 2 L, and a No. 3 water glass aqueous solution having an Si concentration of 1.67 mol/L was supplied at a flow rate of 21.4 ml/min and an aluminum sulfate aqueous solution having an Al concentration of 0.32 mol/L was supplied at a flow rate of 21.4 ml/min simultaneously by using a metering pump under agitation to carry out a continuous reaction at 30±1°C for 2 hours. The Si/Al ratio was 5.22. The obtained reaction solution had a pH of 10.7.

### [step (2)]

The obtained reaction suspension was fed to a 10-L stainless-steel tank to be aged at 60°C for 2 hours.

### [step (3)]

The aged suspension was cooled to normal temperature and suction filtered by using a nutsche filter so as to form cake. Then, 7,000 mL of tap water was let pass through the cake to wash it.

### [step (4)]

Then, after dehydration, the cake was dried by using a laboratory scale hot air dryer and ground by means of a hammer mill to obtain aluminum silicate 4. The characteristic properties of the obtained aluminum silicate 4 are shown in Table 1.

### [cesium ion adsorption test]

The same operation as in the cesium ion adsorption test 3 of Example 1 was carried out. The result is shown in Table 2.

### Example 5 (production of aluminum silicate 5)

### [step (1)]

4, 000 mL of an aluminum sulfate aqueous solution having an Al concentration of 0.32 mol/L was fed to a 10-L stainless-steel tank, and 4,000 mL of a No. 3 water glass aqueous solution having an Si concentration of 1.67 mol/L was injected in 1 hour by using a metering pump under agitation. The Si/Al ratio was 5.22. The reaction temperature was 30±1°C, and the pH of the solution after the injection of the water glass aqueous solution was 3.86.

### [step (2)]

The obtained reaction suspension was aged at 95°C for 2 hours.

### [steps (3) and (4)]

The same operations as in Example 1 were carried out. The characteristic properties of the obtained aluminum silicate 5 are shown in Table 1.

### [cesium ion adsorption test]

The same operation as in the cesium ion adsorption test 3 of Example 1 was carried out. The result is shown in Table 2.

### Example 6 (production of aluminum silicate 6)

### [step (1)]

4, 000 mL of a No. 3 water glass aqueous solution having an Si concentration of 1.67 mol/L was fed to a 10-L stainless-steel tank, and 4,000 mL of an aluminum sulfate aqueous solution having an Al concentration of 0.32 mol/L was injected in 1 hour by using a metering pump under agitation. The Si/Al ratio was 5.22. The reaction temperature was 30±1°C, and the pH of the solution after the injection of the aluminum sulfate aqueous solution was 3.92.

### [step (2)]

The obtained reaction suspension was aged at 95°C for 2 hours.

### [steps (3) and (4)]

The same operations as in Example 1 were carried out. The characteristic properties of the obtained aluminum silicate 6 are shown in Table 1.

### [cesium ion adsorption test]

The same operation as in the cesium ion adsorption test 3 of Example 1 was carried out. The result is shown in Table 2.

### Example 7 (production of aluminum silicate 7)

### [step (1)]

800 mL of water was injected into a stainless-steel reactor equipped with an overflow system and having a capacity of 2 L in advance, and a No. 1 water glass aqueous solution having an Si concentration of 1.75 mol/L was supplied at a flow rate of 26 ml/min and an aluminum sulfate aqueous solution having an Al concentration of 0.32 mol/L was supplied at a flow rate of 41 ml/min simultaneously by using a metering pump under agitation to carry out a continuous reaction at 30±1°C for 2 hours. The Si/Al ratio was 3.47. The reaction solution had a pH of 3.90.

### [step (2)]

The obtained reaction suspension was fed to a 10-L stainless-steel tank to be aged at 60°C for 2 hours.

### [steps (3) and (4)]

The same operations as in Example 1 were carried out. The characteristic properties of the obtained aluminum silicate 7 are shown in Table 1.

### [cesium ion adsorption test]

The same operation as in the cesium ion adsorption test 3 of Example 1 was carried out. The result is shown in Table 2.

### Example 8 (production of aluminum silicate 8)

### [step (1)]

800 mL of water was injected into a stainless-steel reactor equipped with an overflow system and having a capacity of 2 L in advance, and a No. 2 water glass aqueous solution having an Si concentration of 1.8 mol/L was supplied at a flow rate of 28.3 ml/min and an aluminum sulfate aqueous solution having an Al concentration of 0.32 mol/L was supplied at a flow rate of 38.7 ml/min simultaneously by using a metering pump under agitation to carry out a continuous reaction at 30±1°C for 2 hours. The Si/Al ratio was 4.11. The reaction solution had a pH of 4.01.

### [step (2)]

The obtained reaction solution was fed to a 10-L stainless-steel tank to be aged at 80°C for 2 hours.

### [steps (3) and (4)]

The same operations as in Example 1 were carried out. The characteristic properties of the obtained aluminum silicate 8 are shown in Table 1.

### [cesium ion adsorption test]

The same operation as in the cesium ion adsorption test 3 of Example 1 was carried out. The result is shown in Table 2.

### Example 9 (production of aluminum silicate 9)

### [step (1)]

800 mL of water was injected into a stainless-steel reactor equipped with an overflow system and having a capacity of 2 L in advance, and a No. 4 water glass aqueous solution having an Si concentration of 1.7 moles/L was supplied at a flow rate of 36.3 ml/min and an aluminum sulfate aqueous solution having an Al concentration of 0.32 mol/L was supplied at a flow rate of 30.7 ml/min simultaneously by using a metering pump under agitation to carry out a continuous reaction at 30±1°C for 2 hours. The Si/Al ratio was 6.28. The reaction solution had a pH of 3.95.

### [step (2)]

The obtained reaction solution was fed to a 10-L stainless-steel tank to be aged at 90°C for 2 hours.

### [steps (3) and (4)]

The same operations as in Example 1 were carried out. The characteristic properties of the obtained aluminum silicate 9 are shown in Table 1.

### [cesium ion adsorption test]

The same operation as in the cesium ion adsorption test 3 of Example 1 was carried out. The result is shown in Table 2.

### Comparative Example 1

### [step (1)]

The same operation as in the step (1) of Example 1 was carried out. The reaction temperature was 30±1°C, and the obtained reaction solution had a pH of 3.97. The Si/Al ratio was 5.19.

### [step (2)]

The obtained reaction solution was fed to a 10-L stainless-steel tank to be aged at 40°C for 2 hours.

### [steps (3) and (4)]

The aged suspension was cooled to normal temperature and suction filtered by using a nutsche filter to form cake. Then, 7,000 mL of tap water was let pass through the cake to wash it. After dehydration, the cake was dried and ground by means of a hammer mill. The characteristic properties of the obtained aluminum silicate are shown in Table 1.

### [cesium ion adsorption test]

The same operation as in the cesium ion adsorption test 3 of Example 1 was carried out. The result is shown in Table 2.

### Comparative Example 2

### [step (1)]

4, 000 mL of an aluminum sulfate aqueous solution having an Al concentration of 0.32 mol/L was fed to a 10-L stainless-steel tank, and 1,150 mL of a No. 3 water glass aqueous solution having an Si concentration of 1.67 mol/L was injected in 30 minutes by using a metering pump under agitation. Then, 3,000 mL of a sodium hydroxide solution having a concentration of 1 mole/L was injected in 60 minutes by using a metering pump. The reaction temperature was 30±1°C, and the pH of the solution after the injection of sodium hydroxide was 4.23. The Si/Al ratio was 1.5.

### [step (2)]

The obtained reaction suspension was aged at 60 °C for 2 hours.

### [steps (3) and (4)]

The same operations as in Example 1 were carried out. The characteristic properties of the obtained aluminum silicate are shown in Table 1.

### [cesium ion adsorption test]

The same operation as in the cesium adsorption test 3 of Example 1 was carried out. The result is shown in Table 2.

### Comparative Example 3

3, 000 mL of an aluminum sulfate aqueous solution having an Al concentration of 0.32 mol/L was fed to a 12-L stainless-steel tank, and 5,750 mL of a No. 3 water glass aqueous solution having an Si concentration of 1.67 mol/L was injected in 60 minutes by using a metering pump under agitation. Then, 1,450 mL of a sulfuric acid aqueous solution having a concentration of 1 mol/L was injected in 30 minutes by using a metering pump. The reaction temperature was 30±1°C, and the pH of the solution after the injection of sodium hydroxide was 4.12. The Si/Al ratio was 10.0.

### [aging]

The obtained reaction suspension was aged at 90°C for 2 hours.

### [washing/drying]

The same operations as in Example 1 were carried out. The characteristic properties of the obtained aluminum silicate are shown in Table 1.

### [cesium ion adsorption test]

The same operation as in the cesium adsorption test 3 of Example 1 was carried out. The result is shown in Table 2.

**Table 1**

| | Chemical composition of obtained aluminum silicate xNa₂O·Al₂O₃·mSiO₂·nH₂O | Na₂O content | Crystal structure | NMR |
|---|---|---|---|---|
| | | (wt%) | X-ray diffraction | tetra-coor dination aluminum (%) |
| Ex.1 | 0.37Na₂O·Al₂O₃·10.3SiO₂·11H₂O | 2.4 | Amorphous | 85 |
| Ex.2 | 1.1Na₂O·Al₂O₃·11.7SiO₂·6.83H₂O | 6.9 | Amorphous | 84 |
| Ex.3 | 0.6Na₂O·Al₂O₃·10.5SiO₂·6.5H₂O | 4.2 | Amorphous | 86 |
| Ex.4 | 1.2Na₂O·Al₂O₃·11.7SiO₂·6.67H₂O | 7.5 | Amorphous | 78 |
| Ex.5 | 0.4Na₂O·Al₂O₃·10.6SiO₂·11.5H₂O | 2.6 | Amorphous | 75 |
| Ex.6 | 0.43Na₂O·Al₂O₃·10.5SiO₂·12.0H₂O | 2.7 | Amorphous | 82 |
| Ex.7 | 0.4Na₂O·Al₂O₃·7.0SiO₂·9.9H₂O | 3.4 | Amorphous | 65 |
| Ex.8 | 0.38Na₂O·Al₂O₃·8.3SiO₂·9.7H₂O | 3.0 | Amorphous | 72 |
| Ex.9 | 0.25Na₂O·Al₂O₃·11.5SiO₂·10.2H₂O | 1.6 | Amorphous | 82 |
| C.Ex.1 | 0.35Na₂O·Al₂O₃·10.2SiO₂·11.5H₂O | 2.3 | Amorphous | 40 |
| C.Ex.2 | 0.25Na₂O·Al₂O₃·3.2SiO₂·7.0H₂O | 3.6 | Amorphous | 35 |
| C.Ex.3 | 0.3Na₂O·Al₂O₃·17.0SiO₂·7.0H₂O | 1.5 | Amorphous | 84 |

| | | | | |
|---|---|---|---|---|
| Ex.: Example, C.Ex.: Comparative Example | | | | |

**Table 2**

| | Cesium adsorption test 1 (ppb) | Cesium adsorption test 2 (ppb) | Cesium adsorption test 3 (ppb) |
|---|---|---|---|
| Ex.1 | <1 | <1 | <1 |
| Ex.2 | - | - | <1 |
| Ex.3 | - | - | <1 |
| Ex.4 | - | - | <1 |
| Ex.5 | - | - | <1 |
| Ex.6 | - | - | <1 |
| Ex.7 | - | - | <1 |
| Ex.8 | - | - | <1 |
| Ex.9 | - | - | <1 |
| C.Ex.1 | 2.2 | 3.8 | 5.6 |
| C.Ex.2 | 3.5 | 5.2 | 7.2 |
| C.Ex.3 | 1.8 | 2.5 | 4.8 |

| | | | |
|---|---|---|---|
| Ex.: Example, C.Ex.: Comparative Example | | | |

As obvious from Table 2, the cesium ion concentration of an aqueous solution having a low cesium ion concentration (Cs = 1 ppm) can be reduced to a value below the detection limit of an inductively-coupled plasma source mass spectrometer (ICP-MS) by treating the aqueous solution with the aluminum silicate of the present invention.

### Effect of the Invention

The aluminum silicate of the present invention is excellent in cesium ion adsorptivity and can adsorb and immobilize a cesium ion contained in cesium ion-containing water. According to the production process of the present invention, aluminum silicate having excellent cesium ion adsorptivity can be produced. Further, according to the method of reducing the content of a cesium ion of the present invention, the content of a cesium ion can be reduced efficiently. This method is expected to be applied to the adsorption of cesium radioactive isotopes ¹³⁷Cs and ¹³⁴Cs.

### Industrial Applicability

The aluminum silicate of the present invention is expected to be used for the adsorption and immobilization of cesium radioactive isotopes ¹³⁷Cs and ¹³⁴Cs.

## Claims

1. Aluminum silicate which is (1) represented by the following formula (I):
xNa₂O·Al₂O₃·mSiO₂·nH₂O (I)
(wherein 0.12 ≦ x ≦ 1.3, 5.0 ≦ m ≦ 15.0, and 5 ≦ n ≦ 15), wherein (2) the Na₂O content is 1.5 to 11.0 wt%, and (3) at least 50 % of aluminum atoms are tetra-coordination aluminum atoms.

2. The aluminum silicate according to claim 1 whose crystal structure is amorphous according to a powder X-ray diffraction method.

3. A process for producing aluminum silicate, comprising the steps of:
(1) reacting a water-soluble silicate with a water-soluble aluminum salt to ensure that the ratio (Si/Al) of silicon atoms contained in the water-soluble silicate to aluminum atoms contained in the water-soluble aluminum salt becomes 2.5 to 7.5 so as to obtain a reaction solution having a pH of 3.5 to 10.5;
(2) aging the reaction solution at 60 to 120°C for 0.5 to 3 hours;
(3) carrying out the solid-liquid separation of the reaction solution to obtain cake; and
(4) washing and drying the cake.

4. The production process according to claim 3, wherein the water-soluble silicate is sodium silicate.

5. The production process according to claim 3, wherein the water-soluble aluminum salt is aluminum sulfate.

6. A method of reducing the content of a cesium ion in an aqueous solution containing the cesium ion by bringing the aqueous solution into contact with aluminum silicate, wherein
(1) the aluminum silicate is represented by the following formula (I):
xNa₂O·Al₂O₃·mSiO₂·nH₂O (I)
(wherein 0.12 ≦ x ≦ 1.3, 5.0 ≦ m ≦ 15.0, and 5 ≦ n ≦ 15),
(2) the Na₂O content of the aluminum silicate is 1.5 to 11.0 wt%, and
(3) at least 50 % of aluminum atoms are tetra-coordination aluminum atoms.

7. The method according to claim 6, wherein the aluminum silicate has an amorphous structure according to a powder X-ray diffraction method.
